# EUROPEAN PATENT SPECIFICATION

(11) **EP 2 442 216 B1**
(45) Date of publication and mention of the grant of the patent: **06.01.2016**
(21) Application number: 10180717.0
(22) Date of filing: 28.09.2010
(51) Int. Cl.: G06F 3/048

(54) **System and method for optimizing the position of a mobile device**
System und Verfahren zur Optimierung der Position eines mobilen Geräts
Système et procédé pour optimiser la position d'un dispositif mobile

(43) Date of publication of application: 18.04.2012
(73) Proprietor: BlackBerry Limited, Waterloo, ON N2K 0A7 (CA)
(72) Inventor: Ranta, Craig Eric, Waterloo Ontario N2L 3W8 (CA)
(74) Representative: Roberts, Gwilym Vaughan

(56) References cited:
- US-A1- 2002 021 278
- US-A1- 2009 262 074

## Description

### FIELD

The present disclosure relates to mobile devices, and more specifically to optimizing the position of the mobile device by providing visual feedback.

### BACKGROUND

Mobile devices are becoming more prevalent and more advanced. Mobile devices can include, but are not limited to, cellular telephones, smart telephones, wireless personal digital assistants (PDAs), and laptop computers with wireless 802.11 or Bluetooth capabilities. These devices can run on a wide variety of networks from data-only networks such as Mobitex^{®} and DataTAC^{®} networks to complex voice and data networks such as GSM/GPRS, CDMA, EDGE, UMTS and CDMA2000 networks. As the technology associated with mobile devices continues to advance, users of these mobile devices are becoming more reliant on these mobile devices. For example, as technology advances are being made with respect to speakers, conducting conversations using a mobile device in speaker mode or hands free mode is a feasible option due to the improved quality of the audio. Typically, conventional mobile devices are using multiple microphones for noise cancellation and speakerphone algorithms.

US 2009/262074 details systems and methods capable of facilitating interaction with handheld electronics devices based on sensing rotational rate around at least three axes and linear acceleration along at least three axes. In one example, a handheld electronic device includes a subsystem providing display capability, a set of motion sensors sensing rotational rate around at least three axes and linear acceleration along at least three axes, and a subsystem which, based on motion data derived from at least one of the motion sensors, is capable of facilitating interaction with the device.

US 2002/021278 details a device having a display, at least one sensor signal is generated from a sensor in the device. One or more context values are then generated from the sensor signal. The context values indicate how the device is situated relative to one or more objects. At least one of the context values is then used to control the operation of one or more aspects of the device.

The invention is defined according to the mobile device of claim 1 and the method of claim 12.

### BRIEF DESCRIPTION OF THE DRAWINGS

Implementations of the present disclosure will now be described, by way of example only, with reference to the attached Figures, wherein:

Figure 1 is a block diagram of a mobile device in a communication network in accordance with an exemplary implementation;

Figure 2 is a front view of a mobile device displaying a visual indicator indicating a yaw change in accordance with an exemplary implementation;

Figure 3 is a front view of a mobile device displaying a visual indicator after a yaw change in accordance with an exemplary implementation;

Figure 4 is a front perspective view of a mobile device displaying a visual indicator indicating a roll change in accordance with an exemplary implementation;

Figure 5 is a front view of a mobile device displaying a visual indicator after a roll change in accordance with an exemplary implementation;

Figure 6 is a front perspective view of a mobile device displaying a visual indicator indicating a pitch change in accordance with an exemplary implementation;

Figure 7 is a front view of a mobile device displaying a visual indicator after a pitch change in accordance with an exemplary implementation;

Figure 8 is a front perspective of a mobile device displaying a visual indicator indicating a yaw, roll and pitch change in accordance with an exemplary implementation;

Figure 9 is a front view of a mobile device displaying a visual indicator after yaw, roll and pitch changes in accordance with an exemplary implementation; and

Figure 10 is a flowchart of a method of providing a visual indicator on a mobile device in accordance with an exemplary implementation.

### DETAILED DESCRIPTION

As will be appreciated for simplicity and clarity of illustration, where appropriate, reference numerals have been repeated among the different figures to indicate corresponding or analogous elements. In addition, numerous specific details are set forth in order to provide a thorough understanding of the implementations described herein. However, those of ordinary skill in the art will understand that the implementations described herein can be practiced without these specific details. In other instances, methods, procedures and components have not been described in detail so as not to obscure the related relevant feature being described. Also, the description is not to be considered as limiting the scope of the implementations described herein.

Several definitions that apply throughout this disclosure will now be presented. The word "coupled" is defined as connected, whether directly or indirectly through intervening components, and is not necessarily limited to physical connections. The term "communicatively coupled" is defined as connected whether directly or indirectly though intervening components, is not necessarily limited to a physical connection, and allows for the transfer of data. The term "mobile device" is defined as any electronic device that is capable of at least accepting information entries from a user and includes the device's own power source. A "wireless communication" means communication that occurs without wires using electromagnetic radiation. The term "memory" refers to transitory memory and non-transitory memory. For example, non-transitory memory can be implemented as Random Access Memory (RAM), Read-Only Memory (ROM), flash, ferromagnetic, phase-change memory, and other non-transitory memory technologies. The term "media" is defined as visual, audio, or combined visual and audio data which can be outputted by a mobile device.

The present disclosure provides a system and method for providing a visual indicator for optimizing the position of a mobile device when the mobile device is being used in a speaker mode. One or more position components in the mobile device can determine the position of the mobile device. The position of the mobile device can be compared to optimal positions for improved audio quality. A visual indicator can be provided to indicate that the mobile device should be adjusted. The visual indicator can show how the mobile device should be adjusted to obtain optimal or improved audio quality.

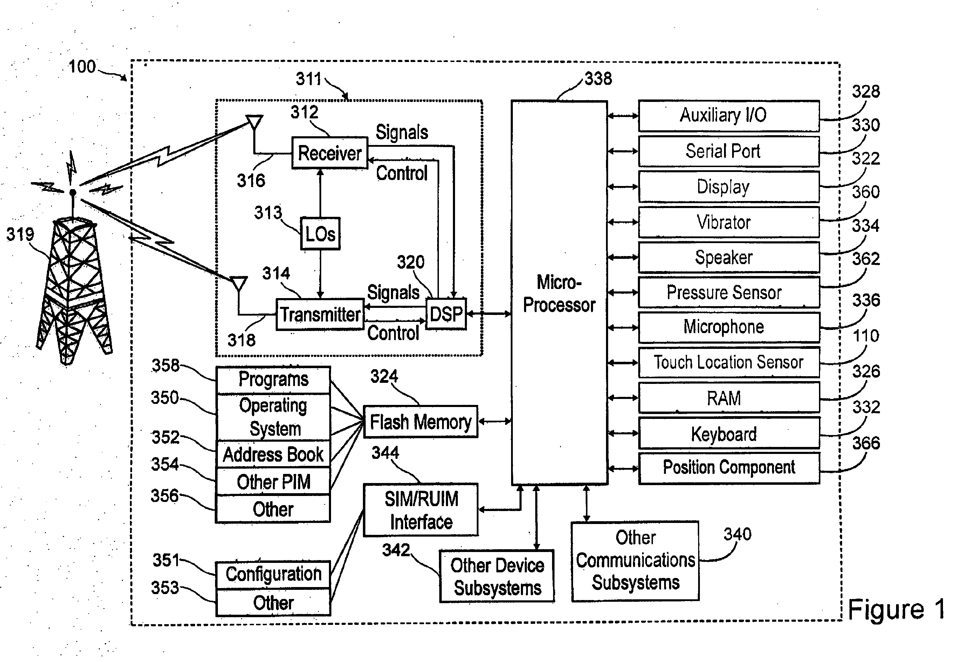

Referring to Figure 1, a block diagram of a mobile device in a communication network in accordance with an exemplary implementation is illustrated. As shown, the mobile device 100 can include a microprocessor 338 that controls the operation of the mobile device 100, such as facilitating communications, providing a graphical user interface, executing programs, and so forth. A communication subsystem 311 performs communication transmission and reception with the wireless network 319. The microprocessor 338 further can be coupled with an auxiliary input/output (I/O) subsystem 328 that can be coupled to the mobile device 100. Additionally, in at least one implementation, the microprocessor 338 can be coupled to a serial port (for example, a Universal Serial Bus port) 330 that facilitates communication with other devices or systems via the serial port 330. A display 322 can be communicatively coupled to the microprocessor 338 to facilitate display of information to an operator of the mobile device 100. When the mobile device 100 is equipped with a keyboard 332, which may be physical or virtual (for example, displayed), the keyboard 332 can be communicatively coupled to the microprocessor 338. The mobile device 100 can include one or more speakers 334 and one or more microphones 336, which may advantageously be communicatively coupled to the microprocessor 338 and discussed in further detail below. Additionally, a vibrator 360, such as a vibrator motor, can be communicatively coupled to the microprocessor 338 to generate vibrations in the mobile device 100. Other similar components can be provided on or within the mobile device 100 and are optionally communicatively coupled to the microprocessor 338. Other communication subsystems 340 and other communication device subsystems 342 are generally indicated as communicatively coupled with the microprocessor 338. An example of a communication subsystem 340 is a short-range communication system such as a BLUETOOTH^{®} communication module or a WI-FI^{®} communication module (a communication module in compliance with IEEE 802.11b) and associated circuits and components. Additionally, the microprocessor 338 can perform operating system functions and executes programs or software applications on the mobile device 100. In some implementations, not all of the above components are included in the mobile device 100. The auxiliary I/O subsystem 328 can take the form of one or more different navigation tools (multi-directional or single-directional), external display devices such as keyboards, and other subsystems capable of providing input or receiving output from the mobile device 100.

The mobile device 100 can be equipped with components to enable operation of various programs, as shown in Figure 1. As shown, the memory 324 can provide storage for the operating system 350, device programs 358, data, and so forth. The operating system 350 can be generally configured to manage other programs 358 that are also stored in memory 324 and executable on the processor 338. The operating system 350 can handle requests for services made by programs 358 through predefined program 358 interfaces. More specifically, the operating system 350 can typically determine the order in which multiple programs 358 are executed on the processor 338 and the execution time allotted for each program 358, manages the sharing of memory 324 among multiple programs 358, handles input and output to and from other device subsystems 342, and so forth. In addition, operators can interact directly with the operating system 350 through a user interface, typically including the keyboard 332 and display screen 322. The operating system 350, programs 358, data, and other information can be stored in memory 324, RAM 326, read-only memory (ROM), or another suitable storage element (not shown). An address book 352, personal information manager (PIM) 354, and other information 356 can also be stored.

The mobile device 100 can be enabled for two-way communication within voice, data, or voice and data communication systems. A Subscriber Identity Module (SIM) or Removable User Identity Module (RUIM) can be utilized to authorize communication with the communication network 319. A SIM/RUIM interface 344 within the mobile device 100 can interface a SIM/RUIM card to the microprocessor 338 and facilitates removal or insertion of a SIM/RUIM card (not shown). The SIM/RUIM card features memory and can hold key configurations 351, and other information 353 such as identification and subscriber related information. The mobile device 100 can be equipped with an antenna 318 for transmitting signals to the communication network 319 and another antenna 316 for receiving communication from the communication network 319. Alternatively, a single antenna (not shown) can be utilized to transmit and receive signals. A communication subsystem 311 can include a transmitter 314 and receiver 312, one or more antennae 316, 318, local oscillators (LOs) 313, and a processing module 320 such as a digital signal processor (DSP) 320.

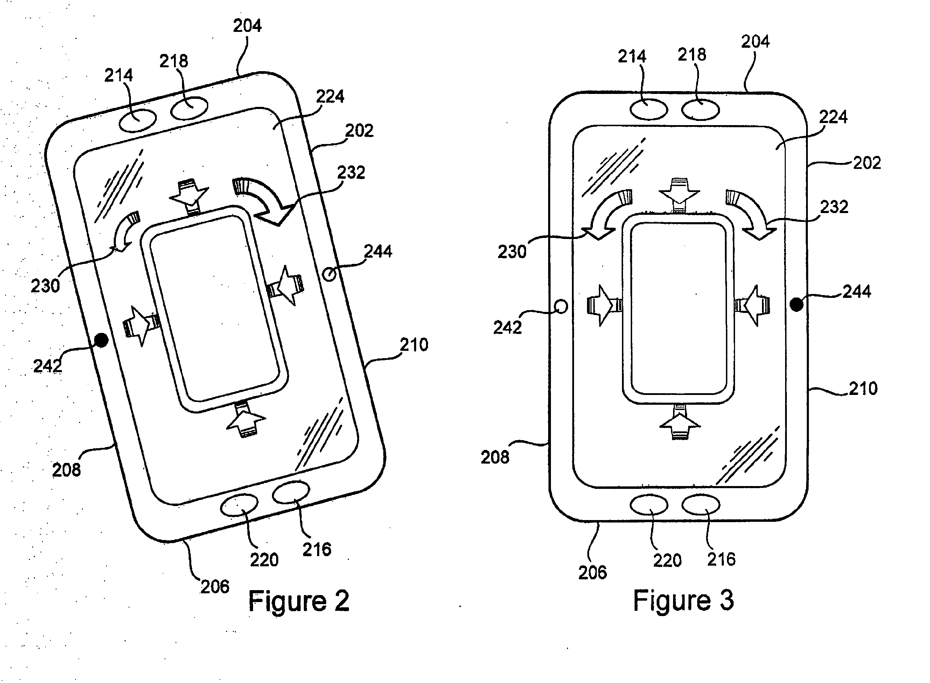

The mobile device 100 can include a touch-sensitive display or touchscreen 224 that includes one or more touch location sensors 364, an overlay 226, and a display 322, such as a liquid crystal display (LCD) or light emitting diode (LED) display, such as shown in Figure 2. The touch location sensor(s) 364 can be a capacitive, resistive, infrared, surface acoustic wave (SAW), or other type of touch-sensitive sensor and can be integrated into the overlay 226. The overlay 226, or cover, can be comprised of laminated glass, plastic, or other suitable material(s) and is advantageously translucent or transparent. A touch, or touch contact, can be detected by the touchscreen 224 and processed by the processor 338, for example, to determine a location of the touch. Touch location data can include the center of the area of contact or the entire area of contact for further processing. A touch may be detected from a contact member, such as a body part of a user, for example a finger or thumb, or other objects, for example a stylus, pen, or other pointer, depending on the nature of the touch location sensor.

The mobile device 100 can include a position component 366 which can detect the position of the mobile device 100. For example, the position component 130 can detect the position or one or more angles of the mobile device 100. The angles can include the roll, pitch, and yaw angles. The position component can be an accelerometer, a gyroscope, a mercury switch, or any other device than can determine the position of the mobile device 100.

By knowing the position of the mobile device 100, position data from the position component 366 can be compared to one or more predetermined position data, for example, ideal or optimal positions of the mobile device 100. For example, the processor 338 can compare the position data such as the yaw, roll, and pitch angles with one or more predetermined position data such as acceptable ranges for each angle. Based on the comparison, the processor 338 can provide a visual indicator to a user informing a user whether the position of the mobile device is in an acceptable position based at least in part on the comparison.

Referring to Figures 2-9, various front views of a mobile device in accordance with exemplary implementations are illustrated. As shown, the mobile device 100 can include a first speaker 214, a second speaker 216, a first microphone 218, and a second microphone 220. The first speaker 214 and the second speaker 216 can be on opposite sides of each other and on the short portions of the mobile device 100. For example, the first speaker 214 can be on the first short portion 204 and the second speaker 216 can be on the second short portion 206. The first microphone 218 and the second microphone 220 can be on opposite sides of each other and on the short portions of the mobile device 100. For example, the first microphone 218 can be on the first short portion 204 and the second microphone 220 can be on the second short portion 206. In a speaker or hands free mode, one or both speakers 214, 216 and one or both microphones 218, 220 can be activated. For example, a first transducer can be on the first short portion 204 and a second transducer can be on the second short portion 206.

As shown in Figures 2-9, each audio component 214, 216, 218, 220 is shown on a top surface 222 of the mobile device 100. Although the audio component 214, 216, 218, 220 are shown on the top surface 222, one or more audio components 214, 216, 218, 220 can be on or about one or more of the top surfaces 222, side, bottom surface or any combination thereof. In one or more implementations, the mobile device can include more or less audio components. In one or more implementations, the audio components can be transducers which can be configured to provide a speaker function or a microphone function.

The mobile device 100 can include one or more position components 366 to detect the position of the mobile device 100. For example, a position component 366 can detect the current position of the mobile device 100 which can include yaw, pitch and roll angles. A single position component 366 can determine all three angles or one or more positions components 366 can detect each angle of the mobile device 100. For example, each angle can have a dedicated position component 366. The position component 366 can include one or more accelerometers, gyroscopes, mercury switches, any combination thereof, or any other device or devices that can detect the position of the mobile device 100.

By knowing the position of the mobile device 100, the determined position can be compared with one or more predetermined or optimal positions. The optimal positions can be positions of a mobile device 100 which provide optimal or acceptable performance or quality. The predetermined positions can be stored in the memory 324 of the mobile device. For example, the predetermined positions can be loaded during or after the mobile device 100 is manufactured. The predetermined positions can be determined via testing, for example, bench testing, of the mobile device 100 to determine one or more positions in which the quality of audio of the mobile device 100 is determined to be optimal or above acceptable criteria. After comparing the detected position of the mobile device 100, the processor 338 can provide a visual indication whether the detected position of the mobile device 100 is acceptable. The visual indication can take several forms, including but not limited to providing an illustration showing how the mobile device 100 should be adjusted, an animation showing how the mobile device 100 should be adjusted, one or more light emitting diodes indicating whether the detected position is acceptable or not, or any other visual indicator providing an indication whether the detected position is acceptable or how to move the mobile device 100 into an acceptable position. In one or more implementations, an audio indicator can be used to provide an indication whether the detected position is acceptable or not.

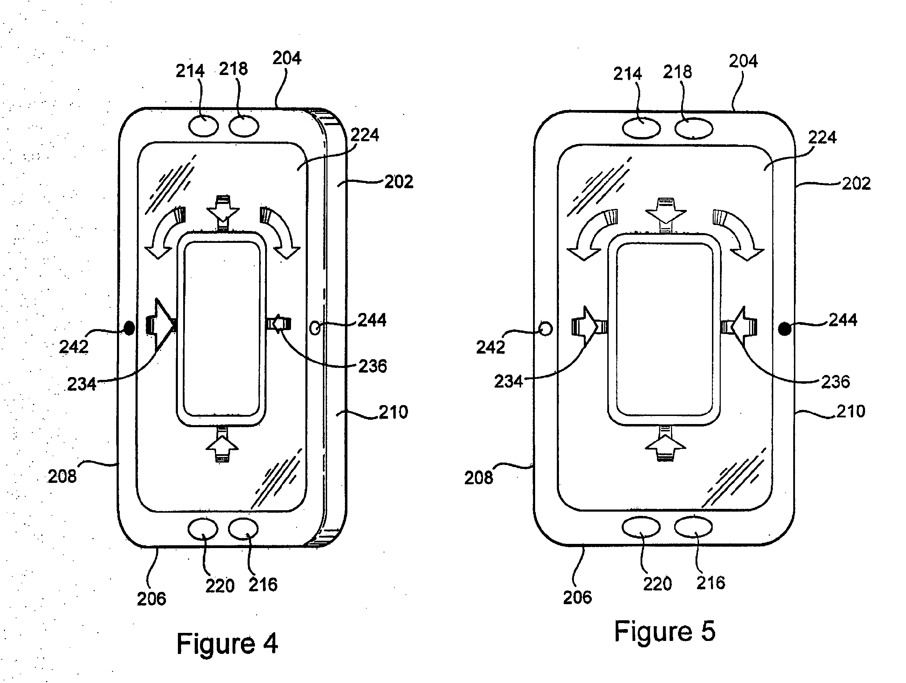

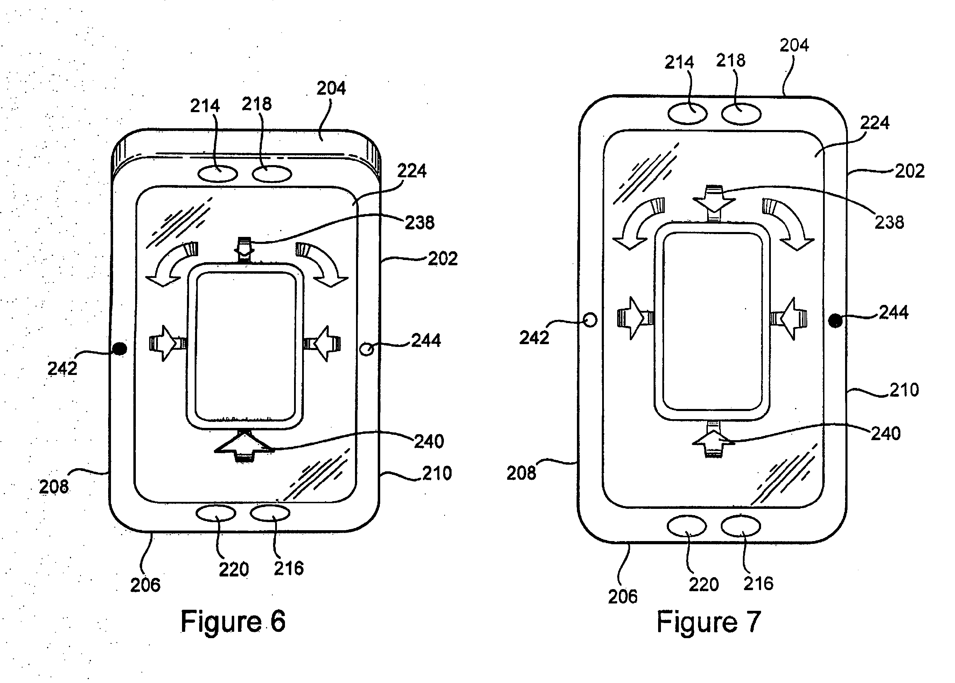

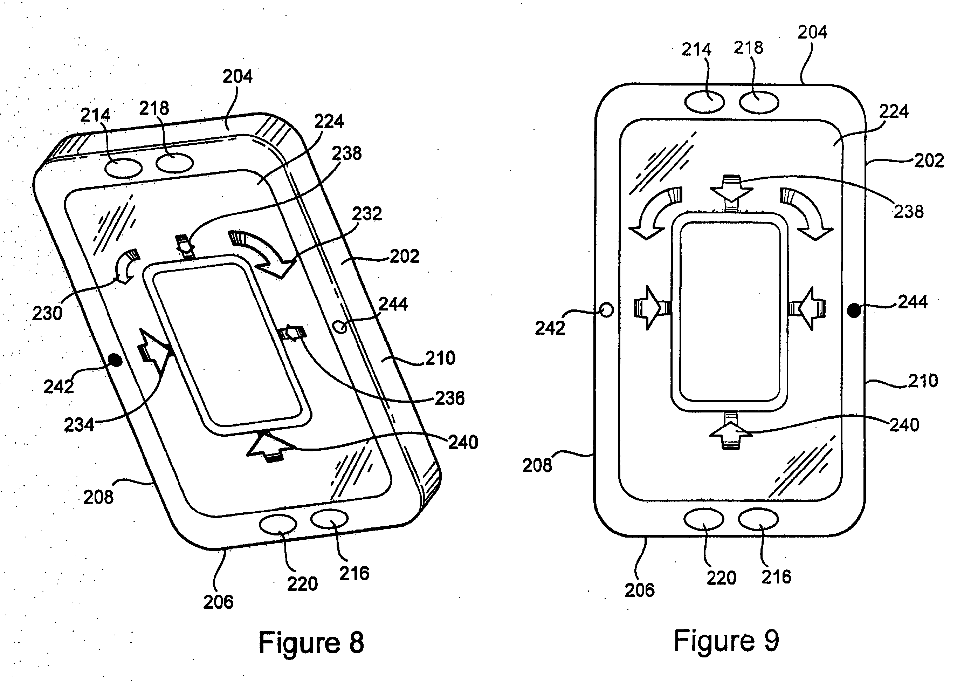

Referring to Figures 2-9, various front views of a mobile device displaying a visual indicator in accordance with an exemplary implementation are illustrated. As shown, the processor 338 can display an image of a mobile device with three sets of arrows: a first yaw arrow 230, a second yaw angle 232, a first roll arrow 234, a second roll arrow 236, a first pitch arrow 238, and a second pitch arrow 240. To provide an indication of how to move the mobile device 100, the arrows can be shown in different sizes, color, or both. For example, as shown in Figure 2, the second yaw arrow 232 is shown as being larger than the first yaw arrow 230 to indicate the yaw angle of the mobile device 100 needs to be adjusted, for example, lowered. In another example, as shown in Figure 4, the first roll arrow 234 is shown as being larger than the second roll arrow 236 to indicate the roll angle of the mobile device 100 needs to be adjusted, for example, twisted. In another example, as shown in Figure 6, the second pitch arrow 240 is shown as being larger than the first pitch arrow 242 to indicate the pitch angle of the mobile device 100 needs to be adjusted, for example, tilted backwards. In yet another example, as shown in Figure 8, the second yaw arrow 232, the first roll arrow 234, and the second pitch arrow 240 are shown as being larger than the first yaw arrow 230, the second roll arrow 236, and the first pitch arrow 238, respectively, to indicate that the yaw, roll and pitch angles of the mobile device 100 need to be adjusted. After the device is adjusted as suggested in Figures 2, 4, 6, and 8 another image of a mobile device 100 can be displayed as shown in Figures 3, 5, 7, and 9 indicating that the mobile device 100 is in an acceptable position.

In one or more implementations, the arrows 230, 232, 234, 236, 238, 240 can be shown in different manners, for example, lengths or sizes, to provide an indication of the relative amount the mobile device 100 should be moved into an acceptable position. In one or more implementations, the arrows 230, 232, 234, 236, 238, 240 can be shown in different colors to indicate how the mobile device 100 should be moved. For example, a red arrow can indicate that the angle (yaw, roll, pitch or any combination thereof) should be moved and a green arrow can indicate that the angle is in an acceptable position. In one or more implementations, an animation can be displayed to show how the mobile device 100 should be adjusted. For example, the display can switch back and forth between the images shown in Figures 2 and 3, Figures 4 and 5, Figures 6 and 7, or Figures 8 and 9.

Referring to Figures 2-9 again, the mobile device 100 can include one or more light emitting diodes (LED) 242, 244 to provide an indication whether the mobile device 100 is in an acceptable position. For example, a first colored LED 242, for example, a red LED, can indicate that the mobile device 100 is not in an acceptable position and a second colored LED 244, for example, a green LED, can indicate that the mobile device 100 is in an acceptable position. In one or more implementations, a multicolored LED (not shown) can be used. For example, the multicolored LED can be illuminated in a first color, for example, green, to indicate that the mobile device 100 is not in an acceptable position and a second color, for example, red, to indicate that the mobile device 100 is not in an acceptable position. As shown in Figures 2, 4, 6, and 8, the first colored LED 242 is illuminated indicating that the mobile device 100 is not in an acceptable position. As shown in Figures 3, 5, 7, and 9, the second colored LED 244 is illuminated indicating that the mobile device 100 is in an acceptable position.

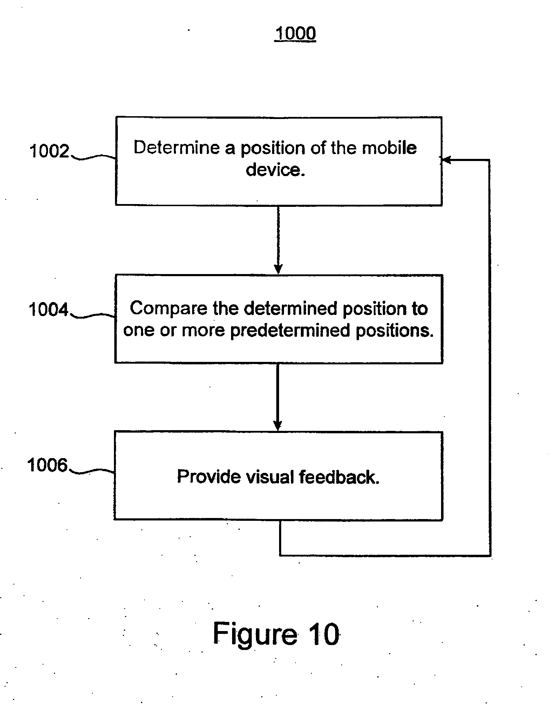

Referring to Figure 10, a flowchart of a method for providing a visual indicator whether a mobile device is in an optimal position for conducting a conversation in a speaker phone mode. The exemplary method 1000 is provided by way of example, as there are a variety of ways to carry out the method. The method 1000 described below can be carried out using the communication devices and communication network shown in Figures 1-9 by way of example, and various elements of these figures are referenced in explaining exemplary method 1000. Each block shown in Figure 10 represents one or more processes, methods or subroutines carried out in exemplary method 1000. The exemplary method 1000 may begin at block 1002.

At block 1002, a position of a mobile device can be determined. For example, the processor 338 receives a position signal from the position component 366 or one or more position components 366. The position signal can include one or more of yaw, pitch, and roll angle data of the determined position of the mobile device 100. After receiving the position signal, the method 1000 can proceed to block 1004.

At block 1004, the determined position can be compared to one or more predetermined positions. For example, in response to the processor 338 receiving the position signal, the processor 338 compares the determined position to one or more predetermined or optimal positions of the mobile device 100. The predetermined positions can include positions that provide optimal audio performance of the mobile device 100. The processor 228 can select the closest match and determine how the mobile device 100 should be adjusted. Other selection processes can be used. After comparing the positions, the method 1000 can proceed to block 1006.

At block 1006, a visual indicator or feedback can be provided. For example, the processor 338 can display an image of the mobile device with arrows indicating how the mobile device 100 should be moved into an acceptable position. For example, Figures 2, 4, and 6 include images showing how the yaw, roll, and pitch angles should be adjusted, respectively. Figures 3, 5, and 7 show that the mobile device 100 is in an acceptable position. After providing the visual indicator, the method 1000 can proceed to block 1002 to determine the latest position of the mobile device 100 and repeat the method 1000 based on the latest position. The method 1000 can be performed at a predetermined rate, for example, every five seconds or in response to one or more position components 366 detecting a change in the position of the mobile device 100.

In the event a mobile device 100 is used in a speaker or hands free mode, the mobile device can cause inferior audio performance due to the position of the mobile device. The system and method described above provide several benefits to a user of a mobile device 100 by providing a visual indicator indicating whether the mobile device is in an optimal position. The visual indicator can take several forms including an illustration showing how the mobile device should be moved, an animation showing how the mobile device should be moved, colors providing an indication whether the position is acceptable, or any combination thereof. As a result of the visual indicator, the user can adjust the position of the mobile device 100 thereby improving the audio performance of the mobile device 100. For example, by adjusting the position of the mobile device 100 in response to the visual indicator, the signal to noise ratio can improve. By adjusting the position of the mobile device 100 to improve the audio performance, a user of the mobile device 100 can elect to use the speaker mode more frequently due to the improved audio performance.

Examples of a mobile device 100 are shown in Figures 1-9. The implementations depicted in the figures show examples only, and persons skilled in the art understand the additional elements and modifications necessary to make the mobile device 100 operate in particular network environments. Although the mobile device 100 comprises a handheld communication device, the mobile device 100 may comprise a handheld wireless communication device, a personal digital assistant (PDA), laptop computer, desktop computer, a server, other communication device, or other portable computing device.

The scope of the disclosure is indicated by the appended claims rather than by the foregoing description. All changes that come within the meaning and range of equivalency of the claims are to be embraced within their scope.

## Claims

1. A mobile device (100) comprising:
at least one speaker (214);
a position component (366) configured to detect a position of the at least one speaker (214) and mobile device (100); and
a processor (338) communicatively coupled to the position component (366), wherein the processor is configured to:
receive position data from the position component (366) indicating the position of the at least one speaker (214) and mobile device (100);
compare the position data of the at least one speaker (214) and mobile device (100) to one or more predetermined position data, wherein the one or more predetermined position data include a position that provides optimal audio performance of the mobile device; and
provide feedback via a visual indicator indicating whether the position of the at least one speaker (214) and mobile device (100) is acceptable based on the comparison.

2. The mobile device (100) of claim 1 wherein the position component (366) is an accelerometer.

3. The mobile device (100) of claim 1 wherein the position component (366) is one of a gyroscope and a mercury switch.

4. The mobile device (100) of claim 1 wherein the position data comprises roll, pitch, and yaw data.

5. The mobile device (100) of claim 1 wherein the predetermined position data comprises acceptable limits for the position of the mobile device (100).

6. The mobile device (100) of claim 1 wherein the visual indicator comprises an image displayed on a display (322) communicatively coupled with the processor (338), the image illustrating how the mobile device (100) should be moved.

7. The mobile device (100) of claim 1 wherein the visual indicator comprises an animation displayed on a display (322) communicatively coupled with the processor (338), the animation illustrating how the mobile device (100) should be moved.

8. The mobile device (100) of claim 1 wherein the visual indicator comprises displaying at least one color on a display communicatively coupled with the processor (338) with the color indicating whether the position of the mobile device (100) is in an acceptable position.

9. The mobile device (100) of claim 8 wherein the at least one color is green indicating the mobile device (100) is in an acceptable position and the at least one color is red indicating the mobile device is not in an acceptable position.

10. The mobile device (100) of claim 1 further comprising:
a green light emitting diode (LED) (242), (244) communicatively coupled to the processor and configured to provide the visual indicator by illuminating in the event the position of the mobile device (100) is in an acceptable position; and
a red LED (242), (244)communicatively coupled to the processor (338) and configured to provide the visual indicator by illuminating in the event the position of the mobile device (100) is not in an acceptable position.

11. The mobile device (100) of claim 1 further comprising a single LED (242) communicatively coupled to the processor and configured to provide the visual indicator by illuminating green in the event the position of the mobile device (100) is in an acceptable position and illuminating red in the event the position of the mobile device (100) is not in an acceptable position.

12. A method for a mobile device (100) having at least one speaker (214), the method comprising:
determining, by a position component (366), a position of the at least one speaker and mobile device (100);
comparing, by a processor (338), the determined position of the at least one speaker and mobile device (100) to one or more predetermined positions, wherein the one or more predetermined positions include a position that provides optimal audio performance of the mobile device; and
providing visual feedback indicating whether the position of the at least one speaker and mobile device (100) is in an acceptable position based on the comparison.

13. The method of claim 12 wherein the position of the mobile device (100) comprises roll, pitch, and yaw data.

14. The method of claim 12 wherein providing visual feedback further comprises displaying an image on a display (322) of the mobile device (100) with the image illustrating how the mobile device (100) should be moved.

15. The method of claim 12 wherein providing visual feedback further comprises displaying an animation on a display (322) of the mobile device (100) illustrating how the mobile device (100) should be moved.

## Patentansprüche

1. Eine mobile Vorrichtung (100), die aufweist:
zumindest einen Lautsprecher (214);
eine Positionskomponente (366), die konfiguriert ist zum Erfassen einer Position des zumindest einen Lautsprechers (214) und der mobilen Vorrichtung (100); und
einen Prozessor (338), der kommunikativ mit der Positionskomponente (366) gekoppelt ist, wobei der Prozessor konfiguriert ist zum:
Empfangen von Positionsdaten von der Positionskomponente (366), die die Position des zumindest einen Lautsprechers (214) und der mobilen Vorrichtung (100) angeben;
Vergleichen der Positionsdaten des zumindest einen Lautsprechers (214) und der mobilen Vorrichtung (100) mit einem oder mehreren vorgegebenen Positionsdaten, wobei das eine oder die mehreren vorgegebenen Positionsdaten eine Position umfasst/umfassen, die eine optimale Audioleistung der mobilen Vorrichtung vorsieht; und
Vorsehen einer Rückmeldung über einen visuellen Indikator, der angibt, ob die Position des zumindest einen Lautsprechers (214) und der mobilen Vorrichtung (100) akzeptabel ist, basierend auf dem Vergleich.

2. Die mobile Vorrichtung (100) gemäß Anspruch 1, wobei die Positionskomponente (366) ein Beschleunigungsmesser ist.

3. Die mobile Vorrichtung (100) gemäß Anspruch 1, wobei die Positionskomponente (366) eine aus einem Gyroskop und einem Quecksilberschalter ist.

4. Die mobile Vorrichtung (100) gemäß Anspruch 1, wobei die Positionsdaten Roll-, Nick- und Gier-Daten aufweisen.

5. Die mobile Vorrichtung (100) gemäß Anspruch 1, wobei die vorgegebenen Positionsdaten akzeptable Grenzen für die Position der mobilen Vorrichtung (100) aufweisen.

6. Die mobile Vorrichtung (100) gemäß Anspruch 1, wobei der visuelle Indikator ein Bild aufweist, das auf einer Anzeige (322) angezeigt wird, die kommunikativ mit dem Prozessor (338) gekoppelt ist, wobei das Bild darstellt, wie die mobile Vorrichtung (100) bewegt werden soll.

7. Die mobile Vorrichtung (100) gemäß Anspruch 1, wobei der visuelle Indikator eine Animation aufweist, die auf einer Anzeige (322) angezeigt wird, die kommunikativ mit dem Prozessor (338) gekoppelt ist, wobei die Animation darstellt, wie die mobile Vorrichtung (100) bewegt werden soll.

8. Die mobile Vorrichtung (100) gemäß Anspruch 1, wobei der visuelle Indikator ein Anzeigen zumindest einer Farbe auf einer Anzeige aufweist, die kommunikativ mit dem Prozessor (338) gekoppelt ist, wobei die Farbe angibt, ob die Position der mobilen Vorrichtung (100) in einer akzeptablen Position ist.

9. Die mobile Vorrichtung (100) gemäß Anspruch 8, wobei die zumindest eine Farbe grün ist, die angibt, dass die mobile Vorrichtung (100) in einer akzeptablen Position ist, und die zumindest eine Farbe rot ist, die angibt, dass die mobile Vorrichtung nicht in einer akzeptablen Position ist.

10. Die mobile Vorrichtung (100) gemäß Anspruch 1, die weiter aufweist:
eine grüne lichtemittierende Diode (LED - light emitting diode) (242), (244),
die kommunikativ mit dem Prozessor gekoppelt ist und konfiguriert ist zum Vorsehen des visuellen Indikators durch Beleuchten in dem Fall, in dem die Position der mobilen Vorrichtung (100) in einer akzeptablen Position ist; und
eine rote LED (242), (244), die kommunikativ mit dem Prozessor (338) gekoppelt ist und konfiguriert ist zum Vorsehen des visuellen Indikators durch Beleuchten in dem Fall, in dem die Position der mobilen Vorrichtung (100) nicht in einer akzeptablen Position ist.

11. Die mobile Vorrichtung (100) gemäß Anspruch 1, die weiter eine einzelne LED (242) aufweist, die kommunikativ mit dem Prozessor gekoppelt ist und konfiguriert ist zum Vorsehen des visuellen Indikators durch grünes Beleuchten in dem Fall, in dem die Position der mobilen Vorrichtung (100) in einer akzeptablen Position ist, und durch rotes Beleuchten in dem Fall, in dem die Position der mobilen Vorrichtung (100) nicht in einer akzeptablen Position ist.

12. Ein Verfahren für eine mobile Vorrichtung (100) mit zumindest einem Lautsprecher (214), wobei das Verfahren aufweist:
Bestimmen, durch eine Positionskomponente (366), einer Position des zumindest einen Lautsprechers und der mobilen Vorrichtung (100);
Vergleichen, durch einen Prozessor (338), der bestimmten Position des zumindest einen Lautsprechers und der mobilen Vorrichtung (100) mit einer oder mehreren vorgegebenen Position(en), wobei die eine oder mehreren vorgegebenen Position(en) eine Position umfasst/umfassen, die eine optimale Audioleistung der mobilen Vorrichtung vorsieht; und
Vorsehen einer visuellen Rückmeldung, die angibt, ob die Position des zumindest einen Lautsprechers und der mobilen Vorrichtung (100) in einer akzeptablen Position ist, basierend auf dem Vergleich.

13. Das Verfahren gemäß Anspruch 12, wobei die Position der mobilen Vorrichtung (100) Roll-, Nick- und Gier-Daten aufweist.

14. Das Verfahren gemäß Anspruch 12, wobei das Vorsehen der visuellen Rückmeldung weiter aufweist ein Anzeigen eines Bilds auf einer Anzeige (322) der mobilen Vorrichtung (100), wobei das Bild darstellt, wie die mobile Vorrichtung (100) bewegt werden soll.

15. Das Verfahren gemäß Anspruch 12, wobei das Vorsehen der visuellen Rückmeldung weiter aufweist ein Anzeigen einer Animation auf einer Anzeige (322) der mobilen Vorrichtung (100), die darstellt, wie die mobile Vorrichtung (100) bewegt werden soll.

## Revendications

1. Dispositif mobile (100) comprenant :
au moins un haut-parleur (214) ;
un composant de position (366) configuré pour détecter une position du au moins un haut-parleur (214) et du dispositif mobile (100) ; et
un processeur (338) couplé communicativement au composant de position (366), où le processeur est configuré pour :
recevoir des données de position en provenance du composant de position (366) indiquant la position du au moins un haut-parleur (214) et du dispositif mobile (100) ;
comparer les données de position du au moins un haut-parleur (214) et du dispositif mobile (100) à une ou plusieurs données de position prédéterminées, où les une ou plusieurs données de position prédéterminées incluent une position qui fournit une performance audio optimale du dispositif mobile ; et
fournir une rétroaction via un indicateur visuel indiquant si la position du au moins un haut-parleur (214) et du dispositif mobile (100) est acceptable sur la base de la comparaison.

2. Dispositif mobile (100) selon la revendication 1, dans lequel le composant de position (366) est un accéléromètre.

3. Dispositif mobile (100) selon la revendication 1, dans lequel le composant de position (366) est l'un d'un gyroscope et d'un commutateur à mercure.

4. Dispositif mobile (100) selon la revendication 1, dans lequel les données de position comprennent des données de roulis, tangage, et lacet.

5. Dispositif mobile (100) selon la revendication 1, dans lequel les données de position prédéterminées comprennent des limites acceptables pour la position du dispositif mobile (100).

6. Dispositif mobile (100) selon la revendication 1, dans lequel l'indicateur visuel comprend une image affichée sur un afficheur (322) couplé communicativement avec le processeur (338), l'image illustrant comment le dispositif mobile (100) devrait être déplacé.

7. Dispositif mobile (100) selon la revendication 1, dans lequel l'indicateur visuel comprend une animation affichée sur un afficheur (322) couplé communicativement avec le processeur (338), l'animation illustrant comment le dispositif mobile (100) devrait être déplacé.

8. Dispositif mobile (100) selon la revendication 1, dans lequel l'indicateur visuel comprend l'affichage d'au moins une couleur sur un afficheur couplé communicativement avec le processeur (338) avec la couleur indiquant si la position du dispositif mobile (100) est dans une position acceptable.

9. Dispositif mobile (100) selon la revendication 8, dans lequel la au moins une couleur est le vert indiquant que le dispositif mobile (100) est dans une position acceptable et la au moins une couleur est le rouge indiquant que le dispositif mobile n'est pas dans une position acceptable.

10. Dispositif mobile (100) selon la revendication 1, comprenant en outre :
une diode électroluminescente (DEL) verte (242), (244) couplée communicativement au processeur et configurée pour fournir l'indicateur visuel en s'éclairant dans le cas où la position du dispositif mobile (100) est dans une position acceptable ; et
une DEL rouge (242), (244) couplée communicativement au processeur (338) et configurée pour fournir l'indicateur visuel en s'éclairant dans le cas où la position du dispositif mobile (100) n'est pas pas dans une position acceptable.

11. Dispositif mobile (100) selon la revendication 1, comprenant en outre une seule DEL (242) couplée communicativement au processeur et configurée pour fournir l'indicateur visuel en s'éclairant en vert dans le cas où la position du dispositif mobile (100) est dans une position acceptable et en s'éclairant en rouge dans le cas où la position du dispositif mobile (100) n'est pas dans une position acceptable.

12. Procédé pour un dispositif mobile (100) ayant au moins un haut-parleur (214), le procédé comprenant :
la détermination, par un composant de position (366), d'une position du au moins un haut-parleur et du dispositif mobile (100) ;
la comparaison, par un processeur (338), de la position déterminée du au moins un haut-parleur et du dispositif mobile (100) à une ou plusieurs positions prédéterminées, où les une ou plusieurs positions prédéterminées incluent une position qui fournit une performance audio optimale du dispositif mobile ; et
la fourniture d'une rétroaction visuelle indiquant si la position du au moins un haut-parleur et du dispositif mobile (100) est dans une position acceptable sur la base de la comparaison.

13. Procédé selon la revendication 12, dans lequel la position du dispositif mobile (100) comprend des données de roulis, tangage, et lacet.

14. Procédé selon la revendication 12, dans lequel la fourniture d'une rétroaction visuelle comprend en outre l'affichage d'une image sur un afficheur (322) du dispositif mobile (100) avec l'image illustrant comment le dispositif mobile (100) devait être déplacé.

15. Procédé selon la revendication 12, dans lequel la fourniture d'une rétroaction visuelle comprend en outre l'affichage d'une animation sur un afficheur (322) du dispositif mobile (100) illustrant comment le dispositif mobile (100) devrait être déplacé.
